(19) Europäisches Patentamt
European Patent Office
Office européen des brevets

(11) Publication number: 0 414 975 B1

# (12) EUROPEAN PATENT SPECIFICATION

(45) Date of publication of patent specification: **11.10.95**

(51) Int. Cl.[6]: **C08L 63/00**, C08L 63/04, C08G 59/40

(21) Application number: **89311355.5**

(22) Date of filing: **02.11.89**

The file contains technical information submitted after the application was filed and not included in this specification

## (54) Thermosetting resin composition.

(30) Priority: **26.08.89 JP 219751/89**

(43) Date of publication of application:
**06.03.91 Bulletin 91/10**

(45) Publication of the grant of the patent:
**11.10.95 Bulletin 95/41**

(84) Designated Contracting States:
**DE GB**

(56) References cited:

**CHEMCIAL ABSTRACTS, vol. 107, no. 16, 16 October 1987 Columbus, OH (US); S. NAGAI et al., p. 53, no. 135431q**

**CHEMICAL ABSTRACTS, vol. 98, no. 20, 19 May 1983, Columbus, OH (US); YOKOHAMA RUBBER CO.LTD., p. 37, no. 161708a**

(73) Proprietor: **SOMAR CORPORATION**
**11-2, Ginza 4-chome**
**Chuo-ku**
**Tokyo 104 (JP)**

Proprietor: **HITACHI, LTD.**
**6, Kanda Surugadai 4-chome**
**Chiyoda-ku,**
**Tokyo 100 (JP)**

(72) Inventor: **Akutagawa, Ichiro**
**198, Edogawadai-Higashi 3-chome**
**Nagareyama-shi**
**Chiba-ken (JP)**
Inventor: **Matsuzaki, Kunimitsu**
**1188, Kamiochiai**
**Yono-shi**
**Saitama-ken (JP)**
Inventor: **Matsuo, Toshio**
**4-52, Minamikoshigaya 1-chome**
**Koshigaya-shi**
**Saitama-ken (JP)**
Inventor: **Fujii, Ryuichi**
**33-8-10-206, Harayama 2-chome**
**Urawa-shi**
**Saitama-ken (JP)**
Inventor: **Umeki, Satoru**
**6-23-14 Kanazawa-cho**
**Hitachi-shi**
**Ibaraki-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

Inventor: **Ono, Yoshimichi**
**463-3, Nakamachisugi**
**Naka-gun**
**Ibaraki-ken (JP)**
Inventor: **Miyamoto, Takeo**
**851, Funaishikawa**
**Tokai-mura**
**Naka-gun**
**Ibaraki-ken (JP)**
Inventor: **Ueta, Koki**
**818-3, Tabiko**
**Katsuta-shi**
**Ibaraki-ken (JP)**
Inventor: **Kamada, Naoki**
**3-12-15, Shiraume**
**Mito-shi**
**Ibaraki-ken (JP)**

(74) Representative: **Allam, Peter Clerk et al**
**LLOYD WISE, TREGEAR & CO.**
**Norman House**
**105-109 Strand**
**London WC2R 0AE (GB)**

## Description

This invention relates generally to a thermosetting resin composition and, more particularly, to an epoxy resin composition useful for insulation of stator or rotor coils.

In the field of automobiles, there are increasing demands for compact motors such as for use in starters in response to the recent demands for minimizing the space of engine rooms. Since the revolution speed of such a small-sized motor must be increased to, for example, as high as several r.p.m. in order to obtain a desired output torque, the current density of the coil is increased so that the temperature of the rotor becomes as high as about 350 °C during use. As a result, when a conventional varnish is used for fixing and insulating the coils, cracks or blisters are formed in the varnish coat during operation of the motor, so that there are caused insulation failure and loosening of the windings.

An epoxy resin composition has also been used for fixing stator coils or armature coils. One such known epoxy resin composition is composed of 3,4-epoxy-cyclohexyl-methyl-(3,4-epoxy)-cycloheanecarboxylate, methylnadic anhydride and resorcinol (Japanese Unexamined Patent Application No. 57-174314). In use, this composition is mixed with a small amount of triethanolamine and the mixture is applied to a coil to be fixed. The curing is performed at 120 °C for 16 hours and then at 180 °C for 16 hours. Thus, this epoxy composition has a drawback because it requires a long curing time. Another problem of the known epoxy resin composition is that the cured resin is poor in heat-resistance and cannot be used under conditions involving a high temperature of 200 °C or more.

It is, therefore, an object of the present invention to provide an improved epoxy resin composition which is useful for insulating stator or rotor coils.

JP-A-61278113 (abstracted in Chemical Abstracts, vol. 107, abstract No. 135431q) discloses a powder coating composition useful for insulating electric motors etc and which comprises (1)60-25 parts by weight of a composition containing (A) 10-15% by weight of a mixture or a pre-reacted mixture of (a) a monomer or prepolymer of a polyfunctional cyanate having at least two cyanato groups with (b) a monomer or prepolymer of a polyfunctional maleimide having at least two N-maleimide groups, and (B) 90-50% by weight of an epoxy resin having a melting point of 50-100 °C and at least three epoxy groups; (2) 40-75 parts by weight of an inorganic filler which may be wollastonite; and (3) a catalyst including (a) an organic metal salt or a metal chelate compound and (b) an organic peroxide.

The thermosetting resin composition in accordance with the present invention comprises:

a liquid epoxy resin;

a curing agent including an acid anhydride;

a maleimide resin in an amount of 3-50 parts by weight per 100 parts by weight of said liquid epoxy resin; and

finely divided wollastonite in an amount of 50-400 parts by weight per 100 parts by weight of said liquid epoxy resin.

In another aspect, the present invention provides a method of insulating windings provided around slots of a rotor, comprising the steps of:

providing the above-mentioned thermosetting resin composition;

applying said composition to said slots and/or said windings; and

curing said applied composition.

The invention will now be described further and reference will be made to the accompanying drawings, in which:

Fig. 1 is a perspective view diagrammatically illustrating a rotor of a motor;

Fig. 2 is a partial, sectional view of the rotor of Fig. 1;

Figs. 3(a) through 3(c) are diagrammaticai illustration of a method of insulating windings of a rotor;

Fig. 4 is a graph showing a relationship between temperature and viscosity of a thermosetting resin composition according to the present invention; and

Figs. 5 through 7 are explanatory views of a method of applying a resin composition to windings of a rotor according to the present invention.

A variety of epoxy resins may be used in the thermosetting resin composition of the present invention as long as they are liquid at room temperature and have two or more epoxy groups in the resin molecule. Illustrative of suitable epoxy resins are glycidyl ether-type epoxy resins such as glycidyl ethers of bisphenol A, brominated bisphenol A, bisphenol F, phenol novolak, glycerin or polyalkylene oxides; glycidyl ester-type epoxy resins such as glycidyl esters of dimer acid or isophthalic acid; alicyclic epoxy resins such as vinylcyclohexene dioxide; and epoxidized polybutadiene obtained by reaction of polybutadiene with peracetic acid.

The above epoxy resins may be used by themselves or in the form of a mixture of two or more thereof. Further, these epoxy resins may be used in conjunction with an epoxy compound serving as a diluent for lowering the viscosity of the thermosetting resin composition. Examples of such diluents include 1,6-hexanediol diglycidyl ether, polyalkyleneglycol diglycidyl ether, trimethylolpropane triglycidyl ether, butyl glycidyl ether and phenyl glycidyl ether. Further, a crystalline or solid epoxy resin may be added to the composition as long as it can be dissolved in the liquid epoxy resin. Examples of such solid epoxy resins include glycidyl ethers of resorcin or hydroquinone.

As a curing agent for the above epoxy resins, the present invention employs an acid anhydride, preferably a liquid acid anhydride. The liquid acid anhydride may be, for example, methyltetrahydrophthalic anhydride, methylhexahydrophthalic anhydride, methylnadic anhydride and methylbutenyltetrahydrophthalic anhydride. These acid anhydrides may be used singly or in combination of two or more thereof. If desired, a crystalline or solid acid anydride may be added to the composition as long as it can be dissolved in the composition. Examples of such solid acid anhydrides are benzophenonetetracarboxylic dianhydride, methylcyclohexenedicarboxylic anhydride and a reaction product of dicyclopentadiene with maleic anhydride. The acid anhydride curing agent is generally used in an amount of 0.5-1.5 mole, preferably 0.7-1.3 mole per one equivalent of the epoxy group of the epoxy resin.

The curing agent is preferably used in conjunction with a curing accelerator such as a tertiary amine, a salt of a tertiary amine, a quaternary ammonium salt, a metal salt, an imidazole compound, a $BF_3$-amine complex and 1,8-diazabicyclo(5,4,0)undecene-7 or an adduct thereof. Illustrative of suitable curing accelerators are benzyldimethylamine, tris(2,4,6-dimethylaminomethyl)phenol or a 2-ethylhexylic acid salt thereof, 1-benzyl-2-methylimidazole, trimethylammonium chloride and $BF_3$-monoethylamine.

The maleimide resin to be used in the present invention preferably is a resin having at least two structural units of the formula:

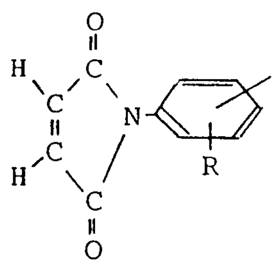

wherein R stands for hydrogen, halogen, alkyl or alkoxy. The maleimide resin may be produced by a conventional method such as a method including the steps of reacting a maleic anhydride compound with a polyamino compound to form a carboxyl group-containing maleamide compound, and subjecting the carboxyl group-containing maleamide compound to dehydrative cyclization. Illustrative of suitable polyamino compounds are phenylenediamine, xylylenediamine, 4,4'-diaminodiphenyl, bis(4-aminophenyl)methane, bis-(4-aminophenyl)ether, bis(4-amino-3-methylphenyl)methane, 2,2-bis(4-aminophenyl)propane, 2,2-bis(4-amino-3-methylphenyl)propane, 2,2-bis(4-amino-3-chlorophenyl)propane and 1,1-bis(4-aminophenyl)-1-phenylethane. The maleimide resin may be commercially available, for example, as MP-2000X and MB-3000 (both products of Mitsubishi Yuka K. K.) and SM-20 and AL-90 (both products of Sumitomo Chemical Industry, Ltd.).

The maleimide resin should be used in an amount of 3-50 parts by weight, preferably 5-20 parts by weight per 100 parts by weight of the epoxy resin. Too large an amount of the maleimide resin in excess of 50 parts by weight is disadvantageous because the penetrability of the resultant composition becomes poor and the cured resin becomes low in cracking resistance. On the other hand, an amount of the maleimide resin below 3 parts by weight tends to reduce the heat resistance of the cured resin.

Wollastonite to be used in the present invention has the chemical formula $CaSiO_3$ and is in the form of fibrous or columnar crystals. The wollastonite preferably has an average particle size of 0.5-100 $\mu$m, more preferably 2-25 $\mu$m.

The wollastonite should be used in an amount of 50-400 parts by weight, preferably 100-300 parts by weight per 100 parts by weight of the epoxy resin. When the wollastonite is used in excess of 400 parts by weight, the penetrability of the composition becomes poor. On the other hand, when the amount of the wollastonite is smaller than 50 parts by weight, the cracking tendency of the cured resin becomes undesirably increased.

The thermosetting resin composition of the present invention may further contain one or more additives such as a flame retarder, a coupling agent, a lubricating agent, slump-preventing agent, a leveling agent, a thixotropic agent, a sedimentation-preventing agent, a dispersing agent, a wetting agent, a dye, a pigment, an adhesion-improver, an anti-foaming agent and a plasticizer, as desired.

During storage and transportation, the composition according to the present invention is preferably rendered in the form of a two-component pack type composition consisting of a first pack including the liquid epoxy resin, the maleimide resin and wollastonite and a second pack including the acid anhydride curing agent. In use, the two packs are mixed and the mixture is applied to an article to be processed.

The thermosetting resin composition according to the present invention is suitably used for insulating windings of a rotor or stator of a motor. Fig. 1 depicts one example of a rotor. Designated generally as 1 is a rotor which includes an armature core 3 composed of a plurality of stacked plates secured to a rotary shaft 2 and a commutator 4 fixed to the shaft 2. The armature core has a plurality of axially extending slots 5 on its periphery within each of which windings 6 are disposed. The windings 6 are electrically connected to the commutator 4. Designated as 7 is an insulating layer provided for insulating the windings 6 as well as for fixing the windings 6 within the slots 5 (see Fig. 2).

The insulating layer 7 may be formed in various ways. Referring to Figs, 3(a) through 3(b), a previously assembled rotor is preheated with a heater 8 to 150-200 °C (Fig. 3(a)) and the thermosetting resin composition 7 is applied dropwise from nozzles 9 to the heated rotor 1, preferably while rotating the rotor about the shaft 2 (Fig.3(b)) at a revolution speed of about 40 rpm. As soon as the composition 7 is applied to the preheated rotor 1, the viscosity of the composition 7 is lowered so that the composition 7 can smoothly penetrate into the slots. The composition 7 then begins curing.

Fig. 4 illustrates relationship between temperature and viscosity of a typical thermosetting resin composition of the present invention. At a temperature of 25 °C, the viscosity is about 550 cP. The viscosity decreases as the temperature is raised and become 10 cP at about 160 °C. Thereafter, the viscosity abruptly and quickly increases due to gellation of the composition. In order to permit the applied composition 7 to penetrate into the slots and to be cured within a short period of time, the pre-heating of the rotor with the heater 8 is preferably performed at 160-180 °C.

Figs. 5 through 7 illustrate alternative embodiments for the applying step of Fig. 3(b). In Fig. 5, the resin composition is charged in a compressive applicator 11 fitted on the preheated rotor 1 and is ejected therefrom under a pressure of 1-3 $kg/cm^2$ to forcibly introduce the composition into the slots. By this, the penetration of the resin is accelerated.

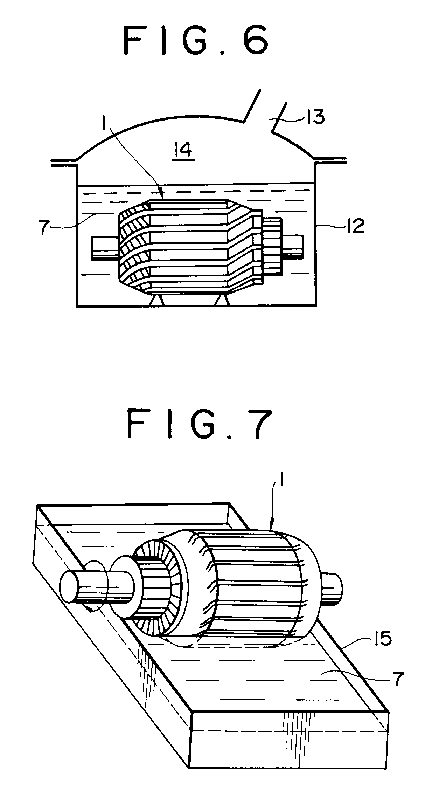

In the embodiment of Fig. 6, the preheated rotor 1 is immersed in a bath of the thermosetting resin composition 7 stored in a tank 12. The inside space 14 of the tank 12 is then evacuated to remove air within the slots through a port 13 so that the resin composition 7 can easily penetrate into the slots.

In the embodiment of Fig. 7, the preheated rotor is dipped, while being rotated, in a bath of the thermosetting resin composition 7 stored in a tray 15.

The rotor 1 which has been applied with the resin composition is then heated at a temperature of 160-200 °C for about 5-6 minutes to complete the curing of the resin composition and to form insulating coatings or layers within the slots and both sides of the armature core as shown in Fig. 1.

The rotor whose windings have thus been insulated and fixed in position exhibits excellent thermal resistance. In particular, even when the rotor is operated under severe conditions (at about 5000 rpm and 350 °C for 10 minutes), the insulation layer is free of cracks or deformation and the windings are still firmly bonded with and electrically insulated by the insulation layer.

The following examples will further illustrate the present invention, in which "part" is by weight.

PREPARATION EXAMPLES:

Example 1

A thermosetting resin composition having the following formulation was prepared:

| | |
|---|---|
| Epoxy resin (a mixture of 60 parts of glycidyl ether of Bisphenol A *1 and 40 parts of 3,4-Epoxycyclohexylmethyl 3,4-epoxycyclohexanecarboxylate *2) | 100 parts |
| Maleimide resin*3 | 10 parts |
| Methylhexahydrophthalic anhydride*4 | 91 parts |
| 1-Benzyl-2-methylimidazole*5 | 1 part |
| Wollastonite*6 | 50 parts |

*1: EPIKOTE 828, manufactured by Yuka-Shell Epoxy Inc., number average molecular weight 380
*2: SEROXIDE 2021, manufactured by Dicel Kagaku Kogyo K. K.
*3: MP2000X, manufactured by Mitsubishi Yuka K. K.
*4: Curing agent Me-HHPA, manufactured by Shinnihon Rica K.K.
*5: Curing accelerator IB2MZ, manufactured by Shikoku Kasei Inc.
*6: Average particle size: 10 µm

Example 2

A thermosetting composition was prepared in the same manner as that of Example 1 except that the amount of the wollastonite was increased to 200 parts.

Example 3

A thermosetting composition was prepared in the same manner as that of Example 1 except that the amount of the wollastonite was increased to 300 parts.

Example 4

A thermosetting composition was prepared in the same manner as that of Example 2 except that the amount of the maleimide resin was increased to 20 parts.

Example 5

A thermosetting composition was prepared in the same manner as that of Example 1 except that the amount of the wollastonite was increased to 100 parts and that 92 parts of methyltetrahydrophthalic anhydride (curing agent Me-THPA, manufactured by Dainihon Ink Chemical Industry Ltd.) were used in place of the 91 parts of methylhexahydrophthalic anhydride.

Example 6

A thermosetting composition was prepared in the same manner as that of Example 2 except that the amounts of the maleimide resin and the acid anhydride were increased to 40 parts and 98 parts, respectively and that a mixture of 30 parts of a glycidyl ether of Bisphenol F (EPIKOTE 807, manufactured by Yuka-Shell Epoxy Inc., number average molecular weight: 330) and 70 parts of CEROXIDE 2021 (vide supra) was used as the epoxy resin.

Comparative Example 1

A thermosetting composition was prepared in the same manner as that of Example 4 except that no wollastonite was used.

Comparative Example 2

A thermosetting composition was prepared in the same manner as that of Example 4 except that the amount of the wollastonite was increased to 500 parts.

Comparative Example 3

A thermosetting composition was prepared in the same manner as that of Example 1 except that the amount of the maleimide resin was increased to 60 parts.

Example 7

A two components-pack type thermosetting resin composition was prepared as follows.

First Component:

| | |
|---|---|
| Epoxy resin (a mixture of 60 parts of glycidyl ether of Bisphenol A and 40 parts of 3,4-Epoxycyclohexylmethyl 3,4-epoxycyclohexanecarboxylate) | 100 parts |
| Maleimide resin | 10 parts |
| 1-Benzyl-2-methylimidazole | 1 part |
| Wollastonite | 50 parts |

Second Component:

Methylhexahydrophthalic anhydride

The two components were blended with a blending ratio of the first component to the second component of 161:100 to provide a thermosetting resin composition suitable for slot insulation purposes.

PERFORMANCE TEST:

The thermosetting resin compositions obtained in Examples 1-6 and Comparative Examples 1-3 were subjected to various tests for evaluating their performance. The test methods are as follows:

Penetrability Test:

A copper wire (diameter: 2 mm) is wound around a core to obtain a rotor coil having five-layered windings. The coil is heated to 160 °C, onto which is applied dropwise the epoxy resin composition to be tested while slowly rotating the coil. The coil impregnated with the epoxy resin composition is maintained at 160 °C to cure the composition. After cooling, the coil is cut along a plane crossing the winding direction and the cut surfaces are observed to evaluate the condition of impregnation of the resin. The evaluation is rated as follows:

- A: All of the five-layered windings are impregnated with the resin
- B: Windings of up to the third or fourth layer (from the outermost) are impregnated with the resin
- C: Windings of only the first outermost layer or up to the second layer are impregnated with the resin

Resistance to Temperature Variation Test:

A rotor coil whose windings are insulated by cured resin is prepared in the same manner as that in the above Penetrability Test. The rotor coil is cooled to -40 °C and maintained at that temperature for 30 minutes. Subsequently the coil is heated to 155 °C and maintained at that temperature for 30 minutes. Such an alternate cooling and heating treatment is repeated 10 times. Thereafter, the coil is cut to observe boundaries between the resin layer and the windings with a magnifying glass to check whether there are formed cracks in the resin layer and whether separation of the resin layer from the windings is occurred. The evaluation is made as follows:

A: Neither crack nor separation is observed
B: Crack or separation is observed

Thermal Resistance Test:

A rotor coil whose windings are insulated by cured resin is prepared in the same manner as that in the above Penetrability Test. The rotor coil is heated to 400 °C and maintained at that temperature for 30 minutes. After cooling to room temperature, the coil is cut to observe boundaries between the resin layer and the windings with a magnifying glass to check whether there are formed cracks in the resin layer and whether separation of the resin layer from the windings is occurred. The evaluation is made as follows:

A: Neither crack nor separation is observed
B: Crack or separation is observed

The test results are summarized in Table 1 together with the compositions of the insulating resins.

| | Example No. | | | | | | Comparative Example No. | | |
|---|---|---|---|---|---|---|---|---|---|
| | 1 | 2 | 3 | 4 | 5 | 6 | 1 | 2 | 3 |
| Ingredient | | | | | | | | | |
| EPIKOTE 828 | 60 | 60 | 60 | 60 | 60 | | 60 | 60 | |
| EPIKOTE 807 | | | | | | 30 | | | 30 |
| CEROXIDE 2021 | 40 | 40 | 40 | 40 | 40 | 70 | 40 | 40 | 70 |
| Maleimide resin | 10 | 10 | 10 | 20 | 10 | 40 | 20 | 20 | 60 |
| Me-HHPA | 91 | 91 | 91 | 91 | | 98 | 91 | 91 | 98 |
| Me-THPA | | | | | 92 | | | | |
| Accelerator | 1 | 1 | 1 | 1 | 1 | 1 | 1 | 1 | 1 |
| Wollastonite | 50 | 200 | 300 | 200 | 100 | 200 | - | 500 | 200 |
| Test results | | | | | | | | | |
| Penetrability | A | A | A | A | A | A | A | C | C |
| Temperature Variation | A | A | A | A | A | A | B | * | * |
| Thermal Resistance | A | A | A | A | A | A | B | * | * |

*: Test was not conducted because of poor penetrability.

## Claims

1. A thermosetting resin composition, comprising:
   a liquid (at room temperature) epoxy resin;

a curing agent comprising an acid anhydride;

a maleimide resin in an amount of 3-50 parts by weight per 100 parts by weight of said liquid epoxy resin; and

finely divided wollastonite in an amount of 50-400 parts by weight per 100 parts by weight of said liquid epoxy resin.

**2.** A composition according to claim 1, wherein the maleimide resin and the wollastonite are used in amounts of 5-20 parts by weight and 100-300 parts by weight, respectively, per 100 parts by weight of said epoxy resin.

**3.** A composition according to claim 1 or claim 2, wherein the maleimide resin is a resin having at least two structural units of the formula:

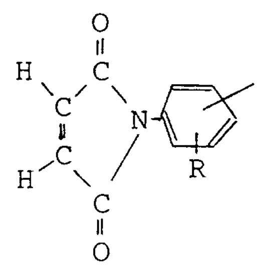

wherein R stands for hydrogen, halogen, alkyl or alkoxy.

**4.** A composition according to any preceding claim, wherein the wollastonite has an average particle size of 0.5-100 μm.

**5.** A composition according to claim 4, wherein said average particle size is 2-25 μm.

**6.** A method of insulating windings provided around slots of a rotor, comprising the steps of:

providing a thermosetting resin composition according to any preceding claim,

applying said composition to said slots and/or said windings; and

curing said applied composition.

**7.** A method according to claim 6, wherein said curing is effected by heating said applied composition at a temperature of 160-200 °C.

**8.** A method according to claim 6 or claim 7, further comprising heating said rotor to 150-200 °C before said applying step.

**9.** A method according to claim any one of claims 6-8, wherein said applying step is carried out by contacting said rotor with a bath of said composition, by applying droplets of said composition on said rotor, or by contacting said rotor with a jet stream of said composition.

**10.** A method according to claim 9, wherein said contacting said rotor with a bath of said composition is performed while rotating said rotor.

**11.** A method according to claim 9, wherein said contacting said rotor with a bath of said composition is performed by immersing said rotor in said bath contained in a closed vessel maintained at a reduced pressure.

**12.** A two-component pack, consisting of a first pack which comprises a liquid (at room temperature) epoxy resin, a maleimide resin in an amount of 3-50 parts by weight per 100 parts by weight of said liquid epoxy resin, and finely divided wollastonite in an amount of 50-400 parts by weight per 100 parts by weight of said liquid epoxy resin; and a second pack which comprises a curing agent comprising an acid anhydride, said first and second packs providing a thermosetting resin composition when mixed with each other.

**Patentansprüche**

1. Eine aushärtbare Harzzusammensetzung bestehend aus
einem (bei Raumtemperatur) flüssigen Epoxidharz,
einem Aushärtungsmittel bestehend aus einem Säureanhydrid,
einem Maleimidharz in einer Menge von 3 - 50 Gewichtsteilen pro 100 Gewichtsteile des flüssigen Epoxidharzes,
und
feinverteiltem Wollastonit in einer Menge von 50 - 400 Gewichtsteilen pro 100 Gewichtsteile des flüssigen Epoxidharzes.

2. Eine Zusammensetzung nach Anspruch 1, dadurch gekennzeichnet, daß das Maleimidharz und das Wollastonit in Mengen von 5 - 20 Gewichtsteilen bzw. 100 - 300 Gewichtsteilen pro 100 Gewichtsteile Epoxidharz verwendet werden.

3. Eine Zusammensetzung nach Anspruch 1 oder Anspruch 2, dadurch gekennzeichnet, daß das Maleimidharz ein Harz mit zumindest zwei Struktureinheiten mit der folgenden Formel ist:

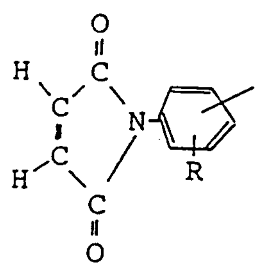

worin R für Wasserstoff, Halogen, Alkyl oder Alkoxy steht.

4. Eine Zusammensetzung nach einem der obigen Anspruch, dadurch gekennzeichnet, daß das Wollastonit eine durchschnittliche Partikelgröße von 0,5 - 100 µm hat.

5. Eine Zusammensetzung nach Anspruch 4, dadurch gekennzeichnet, daß die durchschnittliche Partikelgröße 2 - 25 µm beträgt.

6. Ein Verfahren zur Isolierung von Wicklungen um Nuten eines Rotors, bestehend aus den folgenden Schritten:
Herstellung einer aushärtbaren Harzzusammensetzung gemaß einem der obigen Ansprüche,
Auftragen der Zusammensetzung auf die Nuten und/oder Wicklungen und Aushärten der aufgetragenen Zusammensetzung.

7. Ein Verfahren nach Anspruch 6, dadurch gekennzeichnet, daß das Aushärten durch Erwärmen der aufgetragenen Zusammensetzung auf eine Temperatur von 160 - 200 °C erfolgt.

8. Ein Verfahren nach Anspruch 6 oder Anspruch 7, dadurch gekennzeichnet, daß der Rotor darüber hinaus vor dem Auftragungsschritt auf 150 - 200 °C erwärmt wird.

9. Ein Verfahren nach einem der Ansprüche 6 bis 8, dadurch gekennzeichnet, daß der Auftragungsschritt dadurch erfolgt, daß der Rotor mit einem Bad der Zusammensetzung in Kontakt gebracht wird, daß Tröpfchen der Zusammensetzung auf den Rotor aufgetragen werden oder daß der Rotor mit einem Strahlstrom der Zusammensetzung in Kontakt gebracht wird.

10. Ein Verfahren nach Anspruch 9, dadurch gekennzeichnet, daß der Rotor unter Drehen mit einem Bad der Zusammensetzung in Kontakt gebracht wird.

11. Ein Verfahren nach Anspruch 9, dadurch gekennzeichnet, daß der Rotor mit einem Bad der Zusammensetzung in Kontakt gebracht wird, indem der Rotor in einem geschlossenen Behälter mit verringertem Druck in ein Bad getaucht wird.

**12.** Eine Zweikomponentenpackung bestehend aus einer ersten Packung mit einem (bei Raumtemperatur) flüssigen Epoxidharz, einem Maleimidharz in einer Menge von 3 - 50 Gewichtsteilen pro 100 Gewichtsteile des flüssigen Epoxidharzes und feinverteiltem Wollastonit in einer Menge von 50 - 400 Gewichtsteilen pro 100 Gewichtsteile des flüssigen Epoxidharzes, und einer zweiten Packung mit einem Aushärtungsmittel bestehend aus einem Säureanhydrid, wobei die erste und zweite Packung eine aushärtbare Harzzusammensetzung ergeben, wenn sie miteinander vermischt werden.

## Revendications

**1.** Composition de résine thermodurcissable, comprenant:

une résine époxyde liquide à la température ordinaire;

un agent durcisseur comprenant un anhydride acide;

une résine maléimide à raison de 3-50 parts en poids pour 100 parts en poids de ladite résine époxyde; et

de la wollastonite finement divisée à raison de 50-400 parts en poids pour 100 parts en poids de ladite résine époxyde liquide.

**2.** Composition selon la revendication 1, dans laquelle la résine maléimide et la wollastonite sont utilisées à raison de 5-20 parts en poids et de 100-300 parts en poids, respectivement, pour 100 parts en poids de ladite résine époxyde.

**3.** Composition selon la revendication 1 ou la revendication 2, dans laquelle la résine maléimide est une résine ayant au moins deux unités structurelles de la formule:

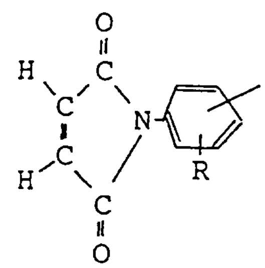

dans laquelle R représente l'hydrogène, un halogène, un alkyle ou un alkoxy.

**4.** Composition selon l'une quelconque des revendications précédentes, dans laquelle la wollastonite a une taille particulaire moyenne de 0,5-100 µm

**5.** Composition selon la revendication 4, dans laquelle ladite taille particulaire moyenne est 2-25 µm.

**6.** Procédé d'isolement des enroulements prévus autour des fentes d'un rotor, comprenant les étapes de :

fourniture d'une composition de résine thermodurcissable selon l'une quelconque des revendications précédentes,

application de ladite composition auxdites fentes et/ou auxdits enroulements ; et

durcissement de ladite composition appliquée.

**7.** Procédé selon la revendication 6, dans lequel ledit durcissement est réalisé par chauffage de ladite composition appliquée à une température de 160-200 ° C.

**8.** Procédé selon la revendication 6 ou la revendication 7, comprenant en outre le chauffage dudit rotor à 150-200 ° C avant ladite étape d'application.

**9.** Procédé selon l'une quelconque des revendications 6-8, dans lequel ladite étape d'application est effectuée par mise en contact dudit rotor avec un bain de ladite composition, par application de gouttelettes de ladite composition sur ledit rotor, ou par mise en contact dudit rotor avec un jet de

ladite composition.

**10.** Procédé selon la revendication 9, dans lequel ladite mise en contact dudit rotor avec un bain de ladite composition est effectuée pendant la rotation dudit rotor.

**11.** Procédé selon la revendication 9, dans lequel ladite mise en contact dudit rotor avec un bain de ladite composition est effectuée par immersion dudit rotor dans ledit bain contenu dans un récipient fermé maintenu à une pression réduite.

**12.** Double emballage constitué d'un premier emballage comprenant une résine époxyde liquide à la température ordinaire, une résine maléimide à raison de 3-50 parts en poids pour 100 parts en poids de ladite résine époxyde liquide et de la wollastonite finement divisée à raison de 50-400 parts en poids pour 100 parts en poids de ladite résine époxyde liquide ; et d'un deuxième emballage comprenant un agent durcisseur constitué d'un anhydride acide, les contenus desdits premier et deuxième emballages fournissant une composition de résine thermodurcissable lorsqu'ils sont mélangés ensemble.

FIG. 1

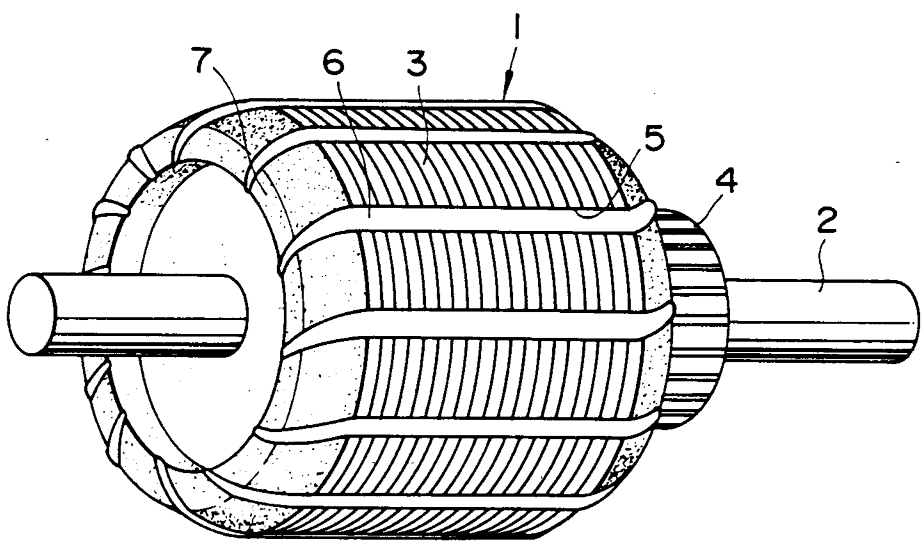


FIG. 2

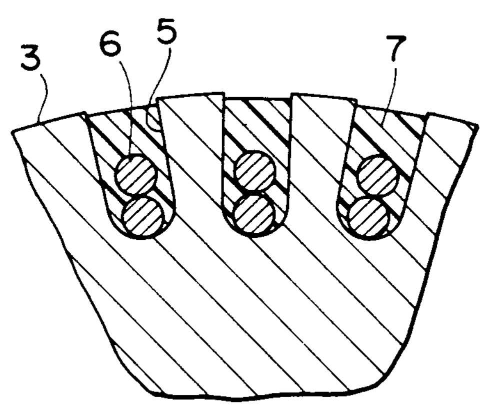

FIG.3(a)

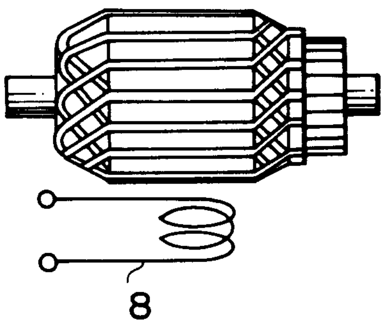


FIG.3(b)

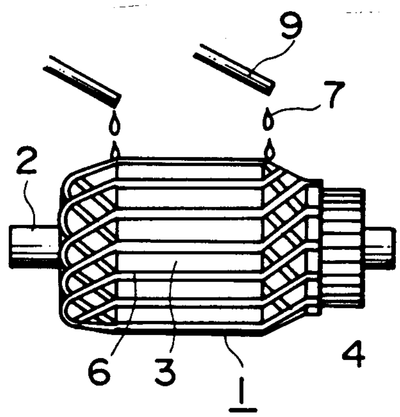


FIG.3(c)

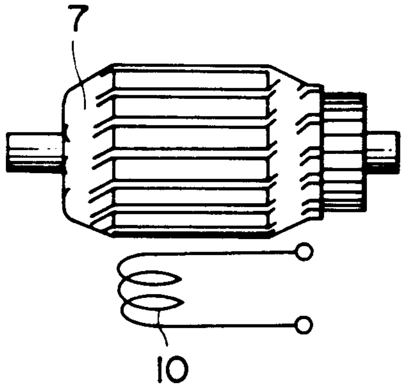

FIG. 4

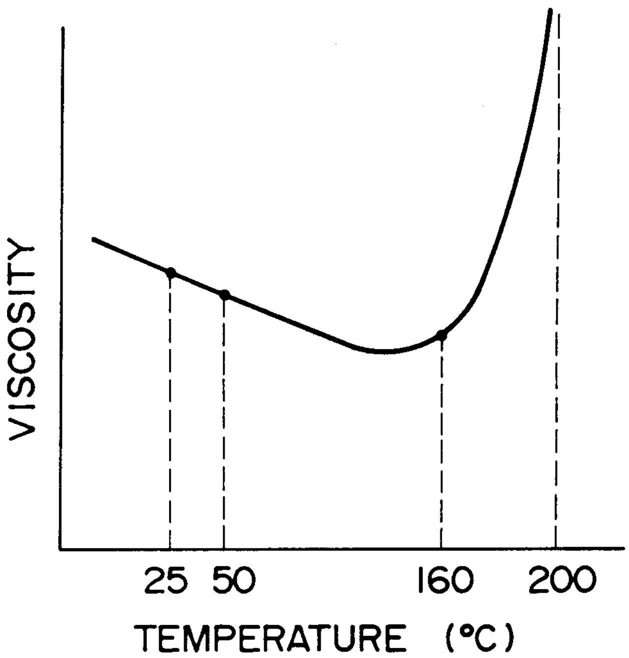


FIG. 5

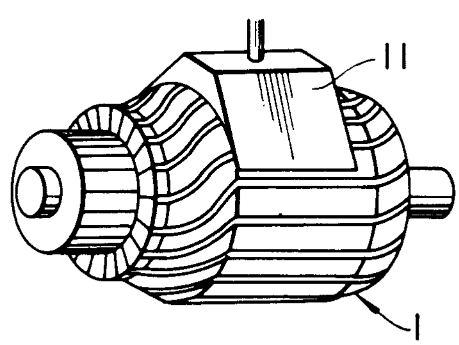

FIG. 6

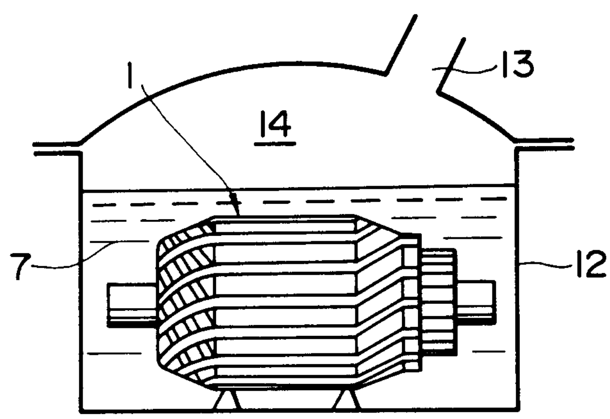


FIG. 7